Europäisches Patentamt

European Patent Office

Office européen des brevets

(19)

(11) Veröffentlichungsnummer : **0 234 333**
**B1**

(12) **EUROPÄISCHE PATENTSCHRIFT**

(45) Veröffentlichungstag der Patentschrift :
**11.10.89**

(51) Int. Cl.⁴ : **B 27 B 25/04**, B 65 G 17/00

(21) Anmeldenummer : **87101326.4**

(22) Anmeldetag : **12.02.87**

(54) **Fördereinrichtung für Baumstämme.**

(30) Priorität : **17.02.86 DE 3604961**

(43) Veröffentlichungstag der Anmeldung :
**02.09.87 Patentblatt 87/36**

(45) Bekanntmachung des Hinweises auf die Patenterteilung : **11.10.89 Patentblatt 89/41**

(84) Benannte Vertragsstaaten :
**AT CH DE FR GB LI SE**

(56) Entgegenhaltungen :
**CH–A– 506 342**
**DE–C– 848 701**

(73) Patentinhaber : **Gebrüder Linck Maschinenfabrik "Gatterlinck" GmbH & Co. KG**
**Appenweierer Strasse 46 Postfach 1341**
**D-7602 Oberkirch (DE)**

(72) Erfinder : **Gönner, Siegmar**
**Albersbacher Strasse 48**
**D-7602 Oberkirch (DE)**

(74) Vertreter : **Görtz, Dr. Fuchs, Dr. Luderschmidt Patentanwälte**
**Sonnenberger Strasse 100 Postfach 26 26**
**D-6200 Wiesbaden (DE)**

EP 0 234 333 B1

Jouve, 18, rue St-Denis, 75001 Paris, France

**Beschreibung**

Die Erfindung betrifft eine Fördereinrichtung für Baumstämme, insbesondere zum Transport von Stämmen durch eine Stammvermessungseinrichtung mit mindestens einer in Transportrichtung bewegbaren Transportkette sowie in Abständen an der (den) Transportkette(n) befestigten und von dieser (diesen) angetriebenen Mitnehmern mit quer zur Transportrichtung geneigten Auflageflächen für die Baumstämme, wobei die Mitnehmer an einer Führungsbahn gleiten oder rollen.

Kettenförderer mit Mitnehmerketten sind in der Sägewerkstechnik weit verbreitet. Die Mitnehmer bestehen im allgemeinen aus mit den Ketten verbundenen Blöcken oder vertikal angeordneten Plattenelementen mit einer leicht V-förmig gewinkelten Auflagefläche, deren tiefster Punkt sich in der Mitte des Mitnehmers befindet und deren Schenkel quer zur Förderrichtung seitlich ansteigen. Die Neigungswinkel der Mitnehmerschenkel betragen häufig zwischen 10° und 20° gegenüber der Horizontalen. Die Auflageflächen an der Oberseite der Mitnehmer können gezahnt sein, um beim Anfahren und Beschleunigen des Förderers oder bei sonstigen Krafteinwirkungen auf die geförderten Stämme deren Rutschen auf den Mitnehmern zu verhindern. Sinn der V-förmig angewinkelten Ausführung ist, daß die Stämme durch Schwerkraftwirkung möglichst eine Mittellage auf den Mitnehmern einnehmen.

Es ist auch bekannt, Baumstämme für eine optimale Schnittaufteilung optisch zu vermessen, wobei dieses Vermessen im Bereich eines Kettenbettförderers stattfinden kann, und zwar sowohl bei einem schrittweisen wie auch kontinuierlichen Vorschub der Stämme auf dem Förderer.

Im allgemeinen hat sich die optische Vermessung der Stämme bisher darauf beschränkt, den Durchmesser des Stammes in bestimmten Abständen zu vermessen, um danach die Abholzigkeit und somit die Ausnutzbarkeit des Stammquerschnittes über die Stammlänge zu ermitteln. Wenn mit einer Rasterkamera oder einer Fotozelleneinrichtung gleichzeitig beide äußeren Stammseitenbegrenzungen an einer Stelle erfaßt werden, um aus ihrer Lagedifferenz den Stammdurchmesser zu ermitteln, so ist es unerheblich, ob der Stamm bei seinem Vorschub bis zur nächsten Meßposition seine Lage auf dem Kettenförderer wegen gewisser Auflageinstabilitäten ändert. Das Meßergebnis wird nicht dadurch beeinflußt, welche Raumlage die Meßstelle am Stamm innehat.

Da Baumstämme nur sehr selten ideal gerade zu sein pflegen, geht man neuerdings in der optischen Vermessung jedoch weiter, indem man neben dem Stammdurchmesser an verschiedenen Stellen auch die Lage der Stammachse zu erfassen sucht, um deren Krümmungsverlauf in Art einer Ortskurve festzuhalten. Aus den mit Computerhilfe erfaßten und ausgewerteten Daten werden anhand der ermittelten Stammkrümmung die günstigsten Trennschnittpositionen festgelegt, um möglichst gerade Einzelabschnitte für eine optimale Querschnittsausnutzung zu erhalten.

Bei Meßverfahren, bei denen der Verlauf der Stammachse mitvermessen wird, kommt es nun darauf an, daß der Stamm bei der erforderlichen schrittweisen oder kontinuierlichen Vorschubbewegung durch die Meßstation seine einmal eingenommene Raumlage beibehält. Dies erfordert eine stabile Auflage auf dem Kettenförderer. Insbesondere verhältnismäßig gerade Stämme, die mit Astansätzen versehen sind, können auf den bekannten, einstückig winkelförmigen Mitnehmern eine Lage einnehmen, bei der sie zwar verhältnismäßig mittig auf den Mitnehmern aber auf Astansätzen aufliegen, so daß sie sich in einem unstabilen Auflagezustand befinden, in dem sie durch die Bewegungskräfte des Förderers leicht zwischen zwei Lagepositionen hin und her kippen.

Es ist Aufgabe vorliegender Erfindung, eine Fördereinrichtung der genannten Art für Baumstämme zu schaffen, bei der gewährleistet ist, daß auch krumme und Astansätze aufweisende Baumstämme während des Transportes durch eine Meßeinrichtung stabiler auf den Mitnehmern aufliegen, als dies bei den bekannten Mitnehmern der Fall ist.

Gelöst wird die Aufgabe dadurch, daß die Auflageflächen der Mitnehmer jeweils nur in einer Richtung durchgehend geneigt sind, und daß die Neigungsrichtung bei aufeinanderfolgenden Mitnehmern oder Gruppen von Mitnehmern wechselweise entgegengesetzt verläuft.

Im allgemeinen wird man die Mitnehmer wechselweise mit entgegengesetzter Neigung versehen, es wäre unter besonderen Voraussetzungen aber auch möglich, beispielsweise jeweils zwei aufeinanderfolgende Mitnehmer mit gleichgerichteter Neigung auszuführen. Dies könnte u. U. dann erforderlich sein, wenn die Mitnehmer ungleichen Abstand voneinander aufweisen, indem jeweils nach einem größeren Abstand zwei Mitnehmer dicht aufeinander folgen.

Durch die erfindungsgemäße Ausbildung der Mitnehmer mit durchgehenden Schrägen ist gewährleistet, daß die Baumstämme nunmehr auch quer zur Fördereinrichtung einen größeren Auflagespielraum haben. Der aufliegende Baumstamm kann sich entsprechend seiner jeweiligen Krümmung mehr oder weniger im unteren oder im oberen Bereich der Schräge befinden, wobei durch die in wechselweiser Richtung verlaufenden Schrägen gewährleistet ist, daß der Baumstamm von beiden Seiten gehalten wird. Durch die Ausbildung der Schrägen leitet der Baumstamm über die Mitnehmer Querkräfte in die Fördereinrichtung ein, die von der Fördereinrichtung seitlich aufgenommen werden müssen. Es sind demzufolge geeignete Stützvorrichtungen bei der Fördereinrichtung zu verwenden.

Die Mitnehmer können dabei unterschiedlich gestaltet sein, beispielsweise derart, daß sie sich in Förderrichtung projiziert überlappen, in Förderrichtung projiziert nicht überlappen oder sogar, daß bei einer Projektion der Mitnehmer ein Mittenabstand gebildet ist, der jedoch kleiner sein muß als die geringste Dicke der Baumstämme. Es sind ferner diverse Ausbildungen der Auflageflächen des Mitnehmers denkbar, beispielsweise kann die schräg verlaufende Auflagefläche eines Mitnehmers gerade oder auch gewölbt sein. Es ist nicht nur denkbar, die Wölbung nach innen, sondern auch nach außen auszubilden. Um eine besonders sichere Lagerung der Baumstämme zu erzielen, kann der jeweilige Mitnehmer eine gezahnte Auflagefläche aufweisen, beispielsweise in Form eines in Richtung der nach unten gerichteten Schräge verlaufenden Sägezahnes. Bei einer derartigen Anordnung eines Sägezahnes wird der Sägezahn radial in den Baumstamm eingreifen und diesen sicher fixieren, so daß keine Rückbewegung des Baumstammes in ansteigender Richtung der Schräge möglich ist.

Wie bereits ausgeführt, werden durch die die Schrägen aufweisenden Mitnehmer Querkräfte in die Fördereinrichtung eingeleitet, die von dieser aufgenommen werden müssen. Die Erfindung macht sich in einer Ausführungsform das Vorhandensein der Querkräfte zunutze, indem sie Mitnehmer vorsieht, die aufgrund der Querkräfte mit gewissem Spiel seitenbeweglich angeordnet sind.

Weitere Merkmale von Augestaltungen der Erfindung sind in den Unteransprüchen, den beigefügten Figuren sowie der Beschreibung der Figuren dargestellt, wobei bemerkt wird, daß alle Einzelmerkmale und alle Kombinationen von Einzelmerkmalen erfindungswesentlich sind.

Es stellt dar :

Fig. 1 einen Querschnitt durch eine Fördereinrichtung mit einer ersten Ausführungsform der erfindungsgemäßen Mitnehmer, wobei die Mitnehmer sich überlappen,

Fig. 2 einen Schnitt entlang der Linie A-A in Fig. 1, wobei jedoch auf die Darstellung eines Baumstammes verzichtet wurde,

Fig. 3 eine vereinfachte Ansicht gemäß Fig. 1, die zwei sich nicht überlappende Mitnehmer zeigt, zwischen denen ein Mittenabstand gebildet ist,

Fig. 4 einen Mitnehmer mit nach innen gewölbter Auflagefläche,

Fig. 5 einen Mitnehmer mit nach außen gewölbter Auflagefläche,

Fig. 6 einen Mitnehmer mit im wesentlichen gerader, jedoch gezahnter Auflagefläche,

Fig. 7 einen Querschnitt durch eine Fördereinrichtung mit zwei Mitnehmern und einer Führungseinrichtung und

Fig. 8 einen Querschnitt durch eine Fördereinrichtung mit einem Mitnehmer und einer Führungseinrichtung.

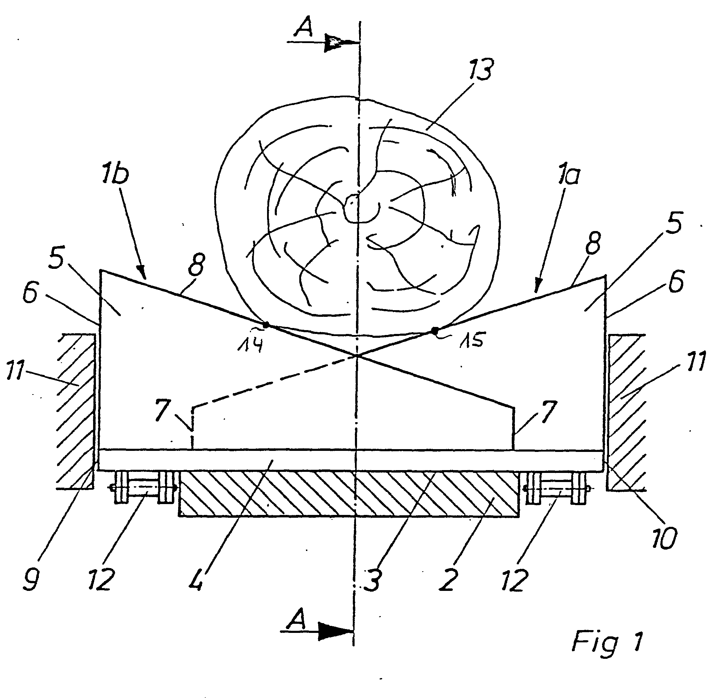

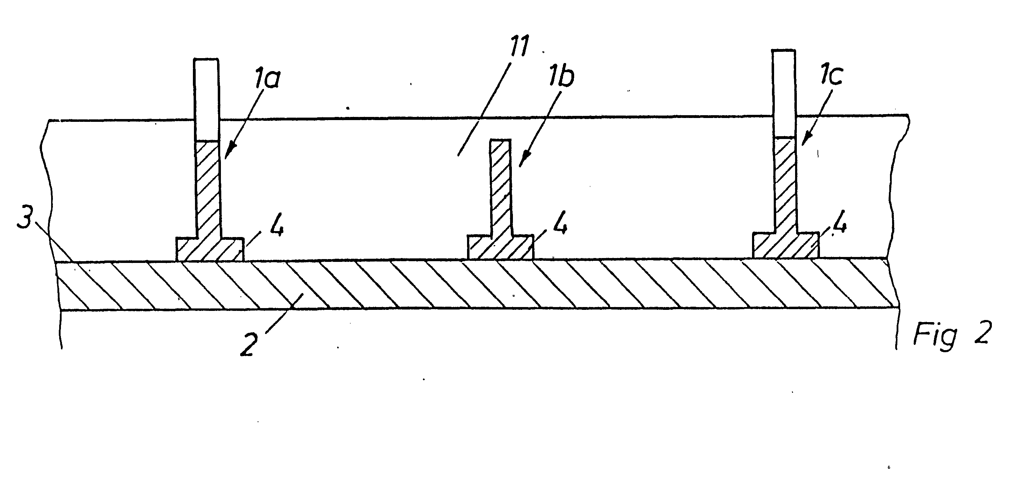

Die Fig. 1 und 2 zeigen einen Ausschnitt einer erfindungsgemäßen Fördereinrichtung mit Mitnehmern 1, genauer mit den Mitnehmern 1a, 1b und 1c. Die Mitnehmer 1 sind auf einer in Förderrichtung verlaufenden Führungsplatte 2 angeordnet, die auf ihrer Oberseite eine Führungsbahn 3 aufweist, auf der die Mitnehmer 1 in Längsrichtung der Platte 2 gleiten können.

Jeder Mitnehmer 1 besitzt einen sich quer zur Förderrichtung erstreckenden Sockel 4, wobei die Länge des Sockels 4, die im Ausführungsbeispiel im wesentlichen der Breite des Förderbettes entspricht, größer ist als die Breite der Platte 2. An den Sockel 4 schließt sich das eigentliche Auflagerelement 5 des Mitnehmers 1 an. Das Lagerteil 5 erstreckt sich senkrecht zum Sockel 4 und zur Führungsbahn 3. Die Kanten 6 und 7 der Mitnehmer 1 verlaufen gleichfalls senkrecht zur Führungsbahn 3, die Kante 6 ist dabei höher als die Kante 7, so daß die zwischen den oberen Enden der Kanten 6 und 7 gebildete Auflagefläche 8 sich als Schräge darstellt. Geführt werden die Mitnehmer 1 im Bereich der Stirnflächen 9 und 10 des Sockels 4 sowie gegebenenfalls im Bereich der Kante 6 des Auflagerelementes 5 durch zwei sich entlang der Seiten der Platte 2 erstreckende Führungsblöcke 11. Wie der Fig. 1 zu entnehmen ist, sind seitlich der Platte 2 an der Unterseite des Sockels 4 jedes Mitnehmers 1 Kupplungsglieder 12 vorgesehen, in die jeweils eine nicht näher dargestellte Transportkette eingreift und somit durch das Einwirken auf die Kupplungsglieder die Mitnehmer in Längsrichtung der Platte 2 und der Führungsblöcke 11 verschiebt.

Wie der Fig. 1 zu entnehmen ist, ist die Fördereinrichtung mit einem Baumstamm 13 beschickt. Es ist zu erkennen, daß der Baumstamm 13 im Punkt 14 auf dem Mitnehmer 1b und dem Punkt 15 auf dem Mitnehmer 1a aufliegt.

Nicht näher dargestellt ist in den Fig. 1 und 2 die Lagerung der Platte 2, die in üblicher Art und Weise in einem Grundrahmen der Fördereinrichtung erfolgt, ferner die Ausbildung der Kinematik. Üblicherweise erfolgt der Antrieb der Mitnehmer 1 mittels einer oder zweier umlaufender Transportketten.

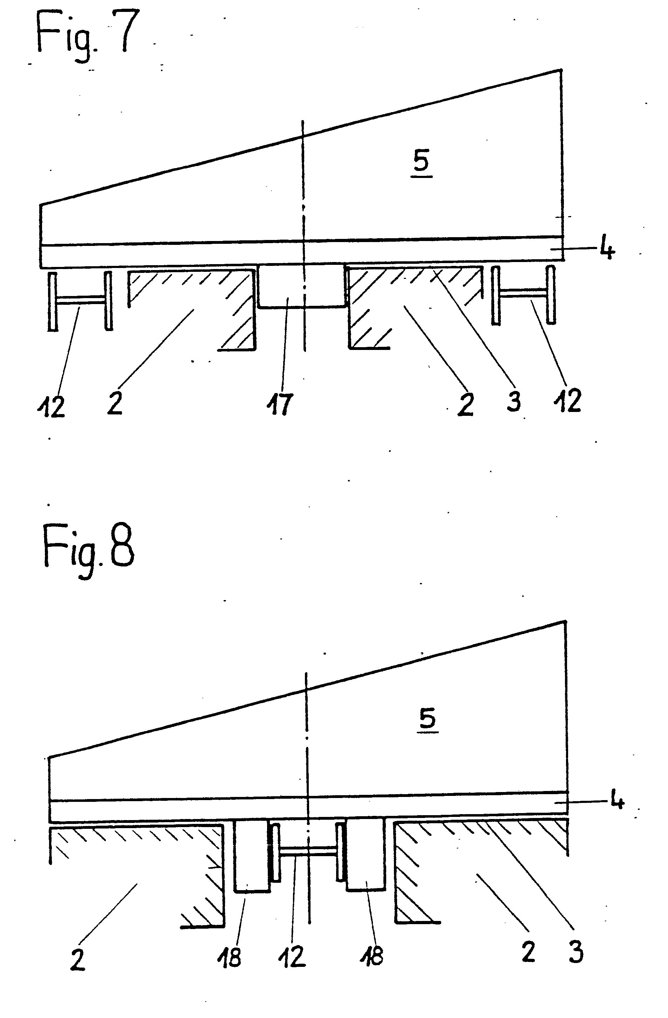

In einer Ausführungsform nach Fig. 7 sind zwei solcher Transportketten vorhanden, deren Kupplungsglieder mit 12 bezeichnet sind. Diese Transportketten verlaufen parallel zueinander und schließen eine geteilte Führungsplatte 2 ein. Zwischen den beiden Teilen der Führungsplatte ist unterhalb des Sockels 4 ein Führungselement 17 angeordnet, das durch die geteilten Platten geführt wird. Dadurch können die Führungsblöcke 11 entfallen.

Im Falle des Vorsehens einer einzigen Transportkette gemäß Fig. 8 wird die Stützplatte 2 zweckmäßigerweise ebenfalls geteilt ausgeführt, so daß die Kette in einem in der Mitte liegenden Längsspalt laufen kann. Hierdurch kann gleichzeitig die seitliche Führung der Mitnehmer erreicht werden. Dazu befindet sich an der Unterseite des Sockels 4 zwischen den geteilten Führungsplatten 2 ein Pufferpaar 18. Zwischen diesen Teilen des Pufferpaares 18 sind Kupplungsglieder 12 der Transportkette befestigt. Durch die Führung des Pufferpaares 18 zwischen den starren Teilen der Führungsplatte 2 ist das Vorhandensein der Führungsblöcke 11 ebenfalls nicht mehr notwendig.

In Fig. 2 ist nur ein Ausschnitt der Fördereinrichtung gezeigt, um die beabstandete Anordnung der Mitnehmer 1a, 1b und 1c zu verdeutlichen. Für eine stabile Lage eines Stammes ist es nicht erforderlich, daß die Mitnehmer in dichter Folge angeordnet sind. Ein krummer Stamm wird im Normalfall ohnehin auf kaum mehr als drei Mitnehmern aufliegen, so daß der Mindestabstand der Mitnehmer darauf abgestellt werden kann, daß noch eine sichere Förderung gewährleistet ist.

Wesentlich ist, daß der Baumstamm 13 auf einer schräg verlaufenden Aufnahmefläche A zu liegen kommt, wobei die Mitnehmer 1a und 1b bzw. 1b und 1c im dargestellten Förderbereich in entgegengesetzter Richtung abgeschrägte Aufnahmeflächen 8 aufweisen. Aufgrund der Schrägen werden durch die Mitnehmer 1 nicht nur senkrecht auf die Platte 2 wirkende Gewichtskräfte, sondern gleichfalls in Richtung jeweils eines Führungsblockes 11 Querkräfte in die Führungsblöcke 11 eingeleitet. Liegt ein Baumstamm 13 auf den Mitnehmern 1 auf, gelangt der Mitnehmer somit zusätzlich in Anlage mit dem entsprechenden Führungsblock 11.

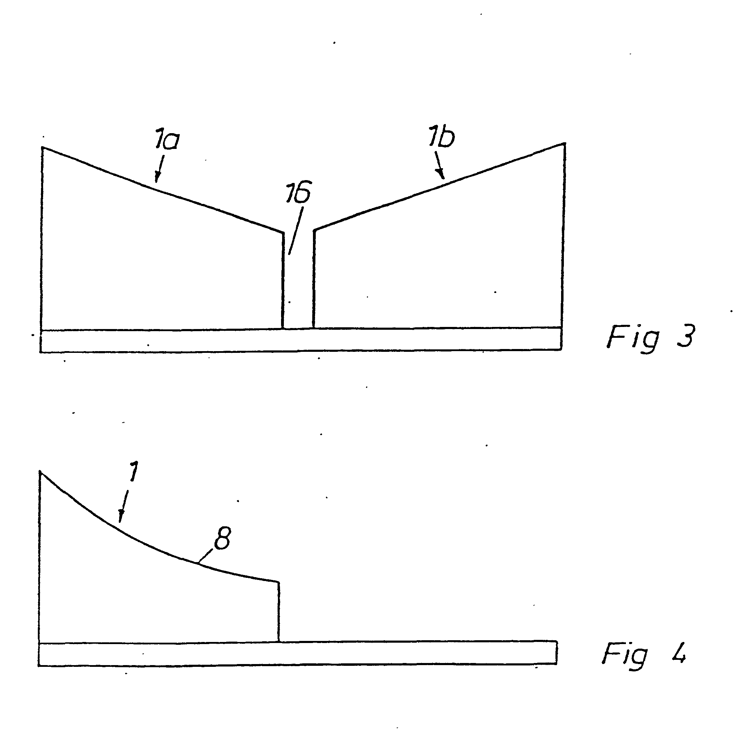

Die erfindungsgemäßen Mitnehmer können zur Erzielung der erfindungsgemäßen Vorteile unterschiedlich gestaltet sein. So ist der Fig. 1 zu entnehmen, daß die Auflagefläche 8 der Mitnehmer nicht von einem Führungsblock 11 zum anderen Führungsblock 11 reicht, vielmehr die niedrigere Kante 7 des Auflagerelementes 5 in Abstand vom betreffenden Führungsblock 11 endet. Wesentlich ist bei der Ausführungsform nach der Fig. 1, daß sich die Mitnehmer 1a und 1b in ihrer in Längsrichtung gesehenen Projektion überlappen. Fig. 3 zeigt zwei Mitnehmer 1a und 1b, die sich in ihrer Projektion nicht nur nicht überlappen, es verbleibt sogar zwischen den Mitnehmern 1a und 1b ein Mittenabstand 16. Nicht näher dargestellt sind in Fig. 3 die Einzelheiten gemäß Fig. 1. Im Prinzip gestaltet sich die Auflage umso stabiler, je steiler die Auflageflächen ausgeführt und umso weniger sich die Mitnehmer überlappen. Aus praktisch technischen Gründen sind hier jedoch Grenzen in der Ausführbarkeit gegeben.

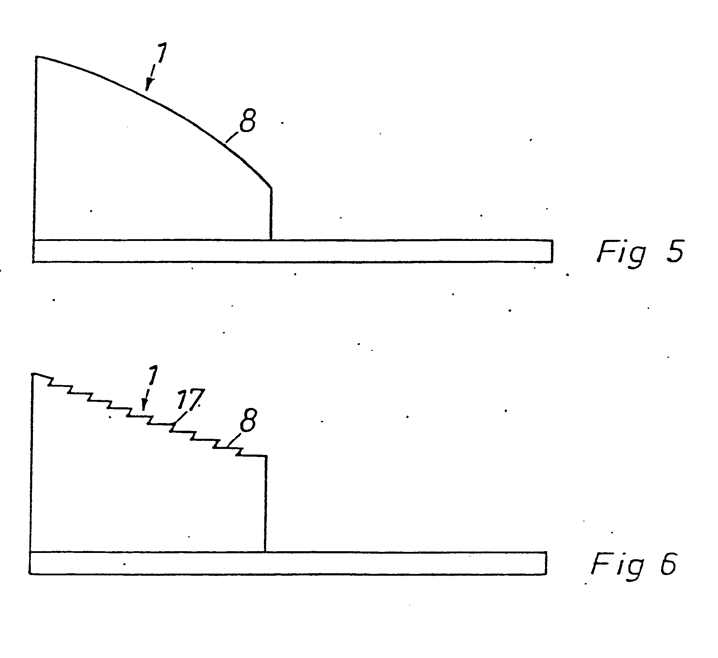

Fig. 4 zeigt einen Mitnehmer 1, der im wesentlichen entsprechend dem in Fig. 3 dargestellten Mitnehmer 1b gestaltet ist, wobei bei dem Mitnehmer 1 gemäß Fig. 4 jedoch die Auflagefläche 8 nach innen gewölbt ist. Fig. 5 stellt einen Mitnehmer 1 gemäß der Darstellung in Fig. 4 dar, bei dem die Auflagefläche 8 nach außen gewölbt ist. Fig. 6 zeigt einen Mitnehmer 1, der im wesentlichen entsprechend dem Mitnehmer 1 in Fig. 3 gestaltet ist, wobei hier jedoch die schräge Auflagefläche 8 zur Mitte gerichtete Sägezähne 17 aufweist. Es versteht sich, daß zu den in den Fig. 4 bis 6 dargestellten Mitnehmern 1 komplementäre Mitnehmer 1 gemäß der Darstellung in der Fig. 1 und 3 existieren, die sich überlappen können oder aber keine Überlappung aufweisen können, wobei zwischen diesen sogar ein Mittenabstand 16 möglich ist.

## Patentansprüche

1. Fördereinrichtung für Baumstämme, insbesondere zum Transport von Stämmen durch eine Stammvermessungseinrichtung mit mindestens einer in Transportrichtung bewegbaren Transportkette sowie in Abständen an der (den) Transportkette(n) befestigten und von dieser (diesen) angetriebenen Mitnehmern mit quer zur Transportrichtung geneigten Auflageflächen für die Baumstämme, wobei die Mitnehmer an einer Führungsbahn gleiten oder rollen, dadurch gekennzeichnet, daß die Auflageflächen (8) der Mitnehmer (1) jeweils nur in einer Richtung durchgehend geneigt sind, und daß die Neigungsrichtung bei aufeinanderfolgenden Mitnehmern (1a, 1b ; 1c, 1d) oder Gruppen von Mitnehmern wechselweise entgegengesetzt verläuft.

2. Fördereinrichtung nach Anspruch 1, dadurch gekennzeichnet, daß die Mitnehmer (1) beider Neigungsrichtungen sich im wesentlichen über die gesamte nutzbare Breite des Förderbettes der Fördereinrichtung erstrecken und bezüglich ihrer Breitenerstreckung in Richtung der Förderkette(n) (12) miteinander fluchten.

3. Fördereinrichtung nach Anspruch 1, dadurch gekennzeichnet, daß die Breite der Mitnehmer (1a, 1b) kleiner ist als die nutzbare Breite des Förderbettes der Fördereinrichtung, und daß die Mitnehmer (1a, 1b) mit der höheren Seite (6) ihrer geneigten Auflagefläche (8) an die Außenseiten des Förderbettes angrenzen.

4. Fördereinrichtung nach Anspruch 3, dadurch gekennzeichnet, daß sich Mitnehmer (1a, 1b) entgegengesetzter Neigungsrichtung in ihrer Projektion in Richtung der Förderkette(n) (12) im Bereich der niedrigeren Enden (7) ihrer geneigten Auflageflächen (8) überlappen.

5. Fördereinrichtung nach Anspruch 3, dadurch gekennzeichnet, daß die niedrigeren Enden (7) der geneigten Auflageflächen (8) von Mitnehmern entgegengesetzter Neigungsrichtung in ihrer Projektion in Richtung der Förderkette(n) (12) einen Abstand (16) voneinander aufweisen.

6. Fördereinrichtung nach einem der Ansprüche 1 bis 5, gekennzeichnet durch in Neigungsrichtung geradlinige Auflageflächen (8) der Mitnehmer (1).

7. Fördereinrichtung nach einem der Ansprüche 1 bis 5, gekennzeichnet durch in Neigungsrichtung konkav oder konvex gewölbte Auflageflächen (8) der Mitnehmer (1).

8. Fördereinrichtung nach einem der Ansprüche 1 bis 6, gekennzeichnet durch gezahnte (Zähne 17) Auflageflächen der Mitnehmer (1).

## Claims

1. A conveying apparatus for tree trunks, particular for transporting tree trunks through a trunk measuring device, having at least one transport chain movable in the transport direction and a plurality of drivers secured at intervals to the transport chain(s), the drive members being driven by the transport chain(s) and having engagement faces for the tree trunks which are inclined in a direction transverse to the transport direction whereby the drive members are capable of sliding or rolling on a guide track, characterized in that the engagement faces (8) of the drivers (1) are inclined continuously in only one direction, and that the direction of inclination alternates in case of successive drive members (1a, 1b ; 1c, 1d) or groups of drivers.

2. The conveying apparatus according to claim 1, characterized in that the drivers (1) of both inclination directions extend substantially over the entire usable width of the conveying bed of the conveying apparatus and align with one another with respect to their extension of width into the direction of the transport chain(s) (12).

3. The conveying apparatus according to claim 1, characterized in that the width of the drivers (1a, 1b) is less than the usable width of the conveying bed of the conveying apparatus and that the drivers (1a, 1b) have the higher side (6) of their inclined engagement face (8) border the outer sides of the conveying bed.

4. The conveying apparatus according to claim 3, characterized in that drivers (1a, 1b) of opposite inclination direction overlap in the central region of said conveying chain(s) (12) in the area of the lower ends (7) of their inclined engaging faces (8).

5. The conveying apparatus according to claim 3, characterized in the lower ends (7) of the inclined engaging faces (8) of drivers of opposite inclination direction are spaced apart in their projection in the direction of the conveying chain(s) (12).

6. The conveying apparatus according to anyone of claims 1-5, characterized in that the engaging faces of said drivers are rectilinear in the inclination direction.

7. The conveying apparatus according to anyone of claims 1-5, characterized in that the engaging faces (8) of said drivers (1) are concavely or convexly curved in the inclination direction.

8. The conveying apparatus according to anyone of claims 1-6, characterized in that the engaging faces of said drivers (1) have teeth (17).

**Revendications**

1. Convoyeur pour troncs d'arbres, en particulier pour le transport de troncs à travers une installation de mesure de troncs comportant au moins une chaîne de transport mobile dans la direction de transport ainsi que des poussoirs fixés à distance sur la ou les chaîne(s) de transport et entraînés par celle(s)-ci comprenant des surfaces d'appui pour les troncs d'arbres inclinées transversalement à la direction de transport, les poussoirs glissant ou roulant sur une voie de guidage, caractérisé en ce que les surfaces d'appui (8) des poussoirs (1) ne sont respectivement inclinées de bout en bout que dans une direction, et en ce que la direction d'inclinaison est opposée en alternance pour des poussoirs (1a, 1b ; 1c, 1d) ou des groupes de poussoirs successifs.

2. Convoyeur selon la revendication 1, caractérisé en ce que les poussoirs des deux directions d'inclinaison s'étendent sensiblement sur toute la largeur utile de la table de transport du convoyeur et affleurent les uns avec les autres en ce qui concerne leur extension en largeur en direction de la ou des chaîne(s) (12) de transport.

3. Convoyeur selon la revendication 1, caractérisé en ce que le largeur des poussoirs (1a, 1b) est inférieure à la largeur utile de la table de transfert du convoyeur, et en ce que les poussoirs (1a, 1b) sont contigus aux côtés extérieurs de la table de transfert par le côté plus élevé (6) de leur surface d'appui inclinée (8).

4. Convoyeur selon la revendication 3, caractérisé en ce que, dans la zone des extrémités inférieures (7) de leurs surfaces d'appui inclinées (8), des poussoirs (1a, 1b) de directions d'inclinaison opposées se recouvrent dans leur projection dans la direction de la ou des chaîne(s) (12) de transfert.

5. Convoyeur selon la revendication 3, caractérisé en ce que les extrémités inférieures (7) des surfaces d'appui inclinées (8) de poussoirs de directions d'inclinaison opposées présentent entre elles une distance (16) dans leur projection dans la direction de la ou des chaîne(s) (12) de transfert.

6. Convoyeur selon l'une des revendications 1 à 5, caractérisé par des surfaces d'appui rectilignes (8) des poussoirs (1) dans la direction d'inclinaison.

7. Convoyeur selon l'une des revendications 1 à 5, caractérisé par des surfaces d'appui incurvées concaves ou convexes (8) des poussoirs (1) dans la direction d'inclinaison.

8. Convoyeur selon l'une des revendications 1 à 6, caractérisé par des surfaces d'appui dentées (dents 17) des poussoirs (1).

Fig 1

Fig 2

2

1a   1b

16

*Fig 3*

1

8

*Fig 4*

Fig 5

Fig 6

# Fig. 7

# Fig. 8